# EUROPEAN PATENT APPLICATION

(11) **EP 4 597 601 A1**
(43) Date of publication of application: **06.08.2025**
(21) Application number: 23871702.9
(22) Date of filing: 31.08.2023
(51) Int. Cl.: H01M 4/13, H01M 4/66, H01M 10/052, H01M 10/0569

(54) **NON-AQUEOUS ELECTROLYTE SECONDARY BATTERY NEGATIVE ELECTRODE AND NON-AQUEOUS ELECTROLYTE SECONDARY BATTERY**

(30) Priority: 30.09.2022 JP 2022158546
(71) Applicant: DKS Co. Ltd., Kyoto-shi, Kyoto 600-8873 (JP); The School Corporation Kansai University, Suita-shi, Osaka 564-8680 (JP)
(72) Inventor: KAJI Soki, kyoto-shi, Kyoto 600-8873 (JP); HOSHIHARA Yuji, kyoto-shi, Kyoto 600-8873 (JP); TANAKA Mana, Kyoto-shi, Kyoto 600-8873 (JP); ISHIKAWA Masashi, Suita-shi, Osaka 564-8680 (JP); HINO Taisei, Suita-shi, Osaka 564-8680 (JP)
(74) Representative: Hoffmann Eitle
(86) International application number: PCT/JP2023/031678
(87) International publication number: WO 2024/070462

(57) **Abstract**

A negative electrode for a nonaqueous electrolyte secondary battery which can improve the coulombic efficiency without a negative electrode active material is provided. The negative electrode for a nonaqueous electrolyte secondary battery according to an embodiment has a current collector and a layer containing a polyurethane resin and single-walled carbon nanotubes placed on the current collector and does not contain a negative electrode active material.

## Description

### Technical Field

Embodiments of the present invention relate to a negative electrode for a nonaqueous electrolyte secondary battery and a nonaqueous electrolyte secondary battery using the same.

### Background Art

Nonaqueous electrolyte secondary batteries such as lithium-ion secondary batteries are used as power sources for driving electronic devices, for example, as storage devices with a high voltage and a high energy density. The negative electrode of a nonaqueous electrolyte secondary battery is generally produced by forming a negative electrode active material layer by applying and drying a mixture containing a negative electrode active material, a conductive additive and a binder on a current collector, and the negative electrode active material is considered as an essential component.

For example, PTL 1 discloses that a mixture electrode corresponding to the negative electrode active material layer formed on a current collector contains a negative electrode active material, carbon nanotubes as a conductive additive and a binder such as polyvinylidene fluoride.

### Citation List

### Patent Literature

PTL 1: JP2015-153714A

### Summary of Invention

### Technical Problem

As mentioned above, the negative electrode active material has been considered as an indispensable component of the negative electrode of a nonaqueous electrolyte secondary battery. If the negative electrode active material could be removed from the negative electrode, however, the mass of the negative electrode can be reduced, which leads to reduction in the weight of the nonaqueous electrolyte secondary battery.

An object of an embodiment of the invention is to provide a negative electrode for a nonaqueous electrolyte secondary battery which can improve the coulombic efficiency without a negative electrode active material.

### Solution to Problem

The invention includes the embodiments shown below.
[1] A negative electrode for a nonaqueous electrolyte secondary battery which has a current collector and a layer containing a polyurethane resin and a single-walled carbon nanotube placed on the current collector and which does not contain a negative electrode active material.
[2] The negative electrode for a nonaqueous electrolyte secondary battery according to [1], wherein the polyurethane resin contains a lithium salt and/or a sodium salt of an anionic polyurethane resin.
[3] The negative electrode for a nonaqueous electrolyte secondary battery according to [1] or [2], wherein the polyurethane resin contains an alicyclic polyisocyanate as a raw material.
[4] The negative electrode for a nonaqueous electrolyte secondary battery according to any one of [1] to [3], wherein the mass ratio (A)/(B) of the polyurethane resin (A) and the single-walled carbon nanotube (B) is 99.9/0.1 to 97.0/3.0.
[5] The negative electrode for a nonaqueous electrolyte secondary battery according to any one of [1] to [4], wherein the thickness of the layer containing the polyurethane resin and the single-walled carbon nanotube is 0.5 to 2 µm.
[6] A nonaqueous electrolyte secondary battery having the negative electrode for a nonaqueous electrolyte secondary battery according to any one of [1] to [5].
[7] The nonaqueous electrolyte secondary battery according to [6], wherein an ionic liquid is used for an electrolyte.

### Advantageous Effects of Invention

According to an embodiment of the invention, a negative electrode for a nonaqueous electrolyte secondary battery which can improve the coulombic efficiency (charge/discharge efficiency) without a negative electrode active material can be provided.

### Brief Description of Drawings

[FIG. 1] A schematic figure of the nonaqueous electrolyte secondary battery according to an embodiment.
[FIG. 2] An exploded perspective view of the cell for evaluation used in the Examples.

### Description of Embodiments

The negative electrode for a nonaqueous electrolyte secondary battery according to the embodiment has a current collector and a layer containing a polyurethane resin and single-walled carbon nanotubes (sometimes called "CNT layer" below) placed on the current collector.

### [Current Collector]

The current collector is not particularly limited as long as the current collector has electron conductivity and can extract current to the outside. The current collector can be formed, for example, from a metal material such as copper, stainless steel, aluminum, nickel and titanium, a conductive polymer, conductive glass or the like. **In** an embodiment, the current collector may be a metal layer formed from a metal material having electron conductivity. The metal layer may be, for example, one obtained by treating the surface of a metal layer of copper or the like with tin, nickel, titanium, silver or the like or one obtained by oxidizing the surface of a metal layer.

The shape of the current collector is not particularly limited. For example, the current collector may be a film like a metal material foil, a sheet or a plate as well as a formed material of a porous material, a foamed material, or the like. The current collector may also be a metal layer formed on a film or a sheet made of a resin for example.

The thickness of the current collector is not particularly limited and may be, for example, 1 to 1000 µm, 5 to 100 µm or 10 to 50 µm.

### [CNT Layer]

The CNT layer is a layer containing single-walled carbon nanotubes as a conductive material and a polyurethane resin as a binder and has conductivity. The CNT layer is a layer formed on the current collector (namely, on a surface of the current collector) instead of a conventional negative electrode active material layer and does not contain a negative electrode active material. The CNT layer formed on the current collector may be provided on one surface of the current collector or both surfaces thereof.

The single-walled carbon nanotubes are carbon nanotubes having a single-layer structure, of carbon nanotubes as a substance having a shape in which a six-membered ring network composed of carbon atoms (graphene sheet) is rolled into a cylinder (sometimes called SWCNTs below).

The diameters (fiber diameters) of the single-walled carbon nanotubes are not particularly limited, and the average diameter thereof may be, for example, 0.4 to 100 nm, 0.5 to 10 nm or 1.0 to 5.0 nm. The lengths of the single-walled carbon nanotubes are not particularly limited, and the average length thereof may be, for example, 50 nm to 1 mm or 0.5 to 100 µm.The aspect ratio of the single-walled carbon nanotubes (namely the ratio of the average length to the average diameter) is not particularly limited and may be, for example, 10 or more or 100 or more.

Here, the average diameter and the average length of the single-walled carbon nanotubes can be determined by measuring the sizes of 50 randomly selected single-walled carbon nanotubes in an atomic force microscope image and determining arithmetic means thereof. Lengths in the order of mm which cannot be measured with an atomic force microscope may be measured using a microscopic image.

As the polyurethane resin, aqueous polyurethane resins such as an anionic polyurethane resin, a cationic polyurethane resin and a nonionic polyurethane resin can be used.

The anionic polyurethane resin is an aqueous polyurethane resin which has an anionic group and which can be dispersed in water. Examples of the anionic group include a carboxy group, a sulfo group, a phosphate group and the like and salts thereof. Any one kind of the anionic groups may be used, or two or more kinds thereof may be combined. Examples of the salts include alkali metal salts such as a lithium salt, a sodium salt and a potassium salt, an ammonium salt and salts of amines such as primary amines, secondary amines and tertiary amines.

The anionic polyurethane resin may be one obtained by reacting an active hydrogen-containing compound having two or more active hydrogen groups, an organic polyisocyanate and a compound having an active hydrogen group and an anionic group. For example, a water dispersion of an anionic polyurethane resin is obtained by synthesizing an isocyanate group-containing urethane prepolymer from an active hydrogen-containing compound having two or more active hydrogen groups, an organic polyisocyanate and a compound having an active hydrogen group and an anionic property, neutralizing the urethane prepolymer with a neutralizer, performing emulsification in water and then extending the chain with a polyvalent amine compound.

Here, the active hydrogen group is a group containing an active hydrogen, which reacts with an isocyanate group, and examples thereof include a hydroxy group, a primary amino group (-NH₂) and a secondary amino group (-NHR).

The active hydrogen-containing compound having two or more active hydrogen groups is a compound having two or more active hydrogen groups in the molecule, and those known in the field of urethane industry can be used. An example thereof is one having two or more hydroxy groups and/or amino groups at a molecular terminal or in the molecule. A polyol compound having two or more hydroxy groups at a molecular terminal is preferable.

Specific examples of the active hydrogen-containing compound having two or more active hydrogen groups include polyhydric alcohols such as ethylene glycol, propylene glycol, propanediol, butanediol, pentanediol, 3-methyl-1,5-pentanediol, hexanediol, neopetyl glycol, diethylene glycol, triethylene glycol, tetraethylene glycol, polyethylene glycol, dipropylene glycol, tripropylene glycol, 1,4-cyclohexanedimethanol, bisphenol A, bisphenol F, bisphenol S, hydrogenated bisphenol A, dibromobisphenol A, 1,4-cyclohexanedimethanol, dihydroxyethyl terephthalate, hydroquinone dihydroxyethyl ether, trimethylolpropane, glycerin and pentaerythritol; alkyleneoxide adducts thereof; esterified materials of any of the polyhydric alcohols or the alkyleneoxide adducts thereof and a polyvalent carboxylic acid, a polyvalent carboxylic anhydride or a polyvalent carboxylic acid ester; polyol compounds such as polycarbonate polyol, polycaprolactone polyol, polyester polyol, polyether polyol, polyacetal polyol, polytetramethylene glycol, polybutadiene polyol, castor oil polyol, soybean oil polyol, fluorine polyol and silicon polyol and denatured materials thereof. The alkyleneoxides include ethylene oxide, propylene oxide, butylene oxide and the like.

Specific examples of the active hydrogen-containing compound having two or more active hydrogen groups also include polyvalent amine compounds including aliphatic polyamine compounds such as ethylenediamine, trimethylenediamine, propylenediamine, diethylenetriamine and triethylenetetramine, aromatic polyamine compounds such as meta-xylene diamine, tolylene diamine and diaminodiphenylmethane, alicyclic polyamine compounds such as piperazine and isophorone diamine, polyhydrazide compounds such as hydrazine and adipic acid dihydrazide and the like.

Any one kind of the active hydrogen-containing compounds listed above may be used, or two or more kinds thereof may be used in combination.

As the organic polyisocyanate, those known in the field of urethane industry can be used, and examples thereof include an aliphatic polyisocyanate, an alicyclic polyisocyanate, an aromatic polyisocyanate and the like. Any one kind thereof may be used, or two or more kinds thereof may be used in combination.

Examples of the aliphatic polyisocyanate include tetramethylene diisocyanate, dodecamethylene diisocyanate, hexamethylene diisocyanate (HDI), 2,2,4-trimethylhexamethylene diisocyanate, lysine diisocyanate and the like.

Examples of the alicyclic polyisocyanate include isophorone diisocyanate (IPDI), dicyclohexylmethane diisocyanate (hydrogenated MDI), hydrogenated xylylene diisocyanate, 1,4-cyclohexane diisocyanate and the like.

Examples of the aromatic polyisocyanate include tolylene diisocyanate (TDI), diphenylmethane diisocyanate (MDI), polymeric MDI, xylylene diisocyanate (XDI), naphthalene diisocyanate and the like.

Moreover, isocyanurates, adducts, biurets, allophenates, carbodiimides and the like of the polyisocyanates may also be used. In addition, any one kind of the organic polyisocyanates may be used, or two or more kinds thereof may be used in combination.

Examples of the compound having an active hydrogen group and an anionic group include compounds having a carboxy group such as hydroxy acids such as glycolic acid, malic acid, glycine, aminobenzoic acid, alanine, dimethylolpropionic acid and dimethylolbutanoic acid, aminocarboxylic acid and polyvalent hydroxy acids, and compounds having a sulfo group such as aminosulfonic acids such as aminoethylsulfonic acid and 2-hydroxyethanesulfonic acid, and hydroxy sulfonic acids. Any one kind thereof may be used, or two or more kinds thereof may be used in combination. Moreover, examples of the neutralizer for neutralizing the anionic groups include alkali metal hydroxides such as lithium hydroxide, potassium hydroxide and sodium hydroxide, ammonia, tertiary amine compounds such as trimethylamine and triethylamine and the like. Any one kind thereof may be used, or two or more kinds thereof may be used in combination.

The polyvalent amine compounds as the chain extenders include the aliphatic polyamine compounds, the aromatic polyamine compounds, the alicyclic polyamine compounds, the polyhydrazide compounds and the like.

The nonionic polyurethane resin is an uncharged aqueous polyurethane resin which does not have any anionic group and any cationic group and which can be dispersed in water. An example of the nonionic polyurethane resin is one obtained by synthesizing an isocyanate group-containing urethane prepolymer from an active hydrogen-containing compound having two or more active hydrogen groups, an organic polyisocyanate and an ethylene oxide alone or an ethylene oxide and a propylene oxide adduct of a monoalcohol or a polyhydric alcohol, emulsifying the urethane prepolymer in water and then extending the chain with a polyvalent amine compound.

The details and the specific examples of the active hydrogen-containing compound having two or more active hydrogen groups, the organic polyisocyanate and the polyvalent amine compound used for the synthesis of the nonionic polyurethane resin are as described above for the anionic polyurethane resin.

The cationic polyurethane resin is an aqueous polyurethane resin which has a cationic group and which can be dispersed in water. The cationic group is a quaternary ammonium group or the like.

The cationic polyurethane resin may be one obtained by reacting an active hydrogen-containing compound having two or more active hydrogen groups, an organic polyisocyanate and a compound having an active hydrogen group and a cationic group. For example, a water dispersion of a cationic aqueous urethane resin is obtained by synthesizing an isocyanate group-containing urethane prepolymer from an active hydrogen-containing compound having two or more active hydrogen groups, an organic polyisocyanate and a compound having an active hydrogen group and a cationic salt-forming group, adding a salt former to the prepolymer, performing emulsification in water and then extending the chain with a polyvalent amine compound.

The details and the specific examples of the active hydrogen-containing compound having two or more active hydrogen groups, the organic polyisocyanate and the polyvalent amine compound used for the synthesis of the cationic polyurethane resin are as described above for the anionic polyurethane resin.

Regarding the compound having an active hydrogen group and a cationic group, examples of the compound having an active hydrogen group and a salt-forming group include N-alkyldialkanolamines such as N,N-dimethylethanolamine, N-methyldiethanolamine and N-ethyldiethanolamine and the like. Any one kind thereof may be used, or two or more kinds thereof may be used in combination. Moreover, examples of the corresponding salt former include organic acids such as formic acid, acetic acid, propionic acid, butyric acid, lactic acid, malic acid, malonic acid, adipic acid, dimethyl sulfate, diethyl sulfate, methyl chloride and benzyl chloride, formic acid, inorganic acids such as hydrochloric acid, phosphoric acid and nitric acid and compounds having a reactive halogen atom.

Of the aqueous polyurethane resins above, in view of the dispersion stability of a coating liquid composition for a negative electrode obtained by dispersing the single-walled carbon nanotubes and the polyurethane resin in water or the like, the anionic polyurethane resin is preferably used. Moreover, because the nucleation overvoltage can be reduced, an alkali metal salt of the anionic polyurethane resin is preferably used as the polyurethane resin, and a lithium salt and/or a sodium salt of the anionic polyurethane resin is more preferably used. In addition, because the effect of improving the coulombic efficiency can be enhanced while the nucleation overvoltage is reduced, a lithium salt of the anionic polyurethane resin is further preferably used.

In an embodiment, the polyurethane resin preferably contains a lithium salt and/or a sodium salt (namely at least one of a lithium salt or a sodium salt) of the anionic polyurethane resin. The polyurethane resin more preferably contains a lithium salt of the anionic polyurethane resin. In these cases, the amount of the lithium salt and/or the sodium salt of the anionic polyurethane resin (preferably the amount of the lithium salt of the anionic polyurethane resin) per 100 mass% of the polyurethane resin is preferably 50 mass% or more, more preferably 70 mass% or more, further preferably 80 mass% or more, further preferably 100 mass%.

In an embodiment, the polyurethane resin preferably contains the alicyclic polyisocyanate as a raw material. This means that the alicyclic polyisocyanate is preferably used as the organic polyisocyanate, and as a result, the dispersion stability of the coating liquid composition for the negative electrode can be improved. In this case, the amount of the alicyclic polyisocyanate per 100 mass% of the organic polyisocyanate is preferably 50 mass% or more, more preferably 70 mass% or more, further preferably 80 mass% or more, further preferably 100 mass%.

In an embodiment, as the polyurethane resin, a lithium salt and/or a sodium salt of an anionic polyurethane resin containing an alicyclic polyisocyanate as a raw material is preferably used. More preferably, a lithium salt and/or a sodium salt of an anionic polyurethane resin obtained by reacting a polyol containing polycarbonate polyol and/or polybutadiene polyol, an organic polyisocyanate containing an alicyclic polyisocyanate and a carboxy group-containing polyol is used. Further preferably, a lithium salt and/or a sodium salt of an anionic polyurethane resin obtained by extending the chain of an isocyanate group-containing urethane prepolymer obtained by reacting a polyol containing polycarbonate polyol and/or polybutadiene polyol, an organic polyisocyanate containing an alicyclic polyisocyanate and a carboxy group-containing polyol with a polyvalent amine compound is used.

In the CNT layer, the mass ratio (A)/(B) of the polyurethane resin (A) and the single-walled carbon nanotubes (B) is preferably 99.9/0.1 to 97.0/3.0. The mass ratio (A)/(B) is more preferably 99.7/0.3 to 97.5/2.5, further preferably 99.5/0.5 to 98.0/2.0.

The polyurethane resin content of the CNT layer is not particularly limited but is preferably 80 mass% or more, more preferably 90 mass% or more, further preferably 97 mass% or more.

The CNT layer may be composed of the polyurethane resin and the single-walled carbon nanotubes only, but as long as the effect of the embodiment is not impaired, another component may be contained. Examples of the other component include multi-walled carbon nanotubes (MWCNTs) and carbon black such as acetylene black and Ketjenblack as conductive materials other than the single-walled carbon nanotubes.

Moreover, as other components, a binder other than the polyurethane resin, a dispersing agent for dispersing the single-walled carbon nanotubes in water, a thickener for adjusting the viscosity of the coating liquid composition for the negative electrode or the like may be contained. Specific examples thereof include polyvinylidene fluoride, styrene-butadiene rubber, hydroxymethylcellulose, carboxymethylcellulose, alkali metal salts thereof, methylcellulose, ethylcellulose, hydroxypropyl methylcellulose, hydroxyethyl methyl cellulose, polyacrylic acid, sodium polyacrylate, polyvinylpyrrolidone, polyvinyl alcohol, sodium alginate, xanthan gum, carrageenan, guar gum, agar, starch and the like.

In an embodiment, the amount of the dispersing agent such as carboxymethylcellulose and/or a salt thereof, per 100 parts by mass of the single-walled carbon nanotubes, may be 10 to 300 parts by mass, 50 to 200 parts by mass or 70 to 150 parts by mass.

The thickness of the CNT layer is preferably 0.5 to 2 µm. That is, although the thickness of the CNT layer may be less than 0.5 µm or more than 2 µm, for improving the processability of the CNT layer and the effect of the embodiment, the thickness is preferably 0.5 to 2 µm, more preferably 0.7 to 1.5 µm.

### [Negative Electrode]

The negative electrode for a nonaqueous electrolyte secondary battery according to an embodiment can be produced, for example, by applying a coating liquid composition for a negative electrode obtained by dispersing the single-walled carbon nanotubes and the polyurethane resin in water on a current collector and evaporating water as the dispersion medium.

The coating liquid composition for the negative electrode contains the single-walled carbon nanotubes, the polyurethane resin and water as a dispersion medium and may optionally contain the other components above. The dispersion medium may be water alone but may contain a polar organic solvent such as an alcohol and a ketone solvent together with water.

In the embodiment, the negative electrode for a nonaqueous electrolyte secondary battery does not contain a negative electrode active material. Because a negative electrode active material is not contained in this manner, the mass of the negative electrode can be reduced. Moreover, because the CNT layer, which does not contain a negative electrode active material, is provided, the coulombic efficiency can be improved while the mass of the negative electrode is reduced.

The negative electrode active material is a substance capable of inserting/eliminating metal lithium or lithium ion and may be one generally used as a negative electrode active material for a nonaqueous electrolyte secondary battery such as a lithium-ion secondary battery. Specific examples of the negative electrode active material include natural graphite, artificial graphite, non-graphitizable carbon, graphitizable carbon, silicon oxide (SiO), silicon, a silicon alloy, lithium titanate and the like.

### [Nonaqueous Electrolyte Secondary Battery]

The nonaqueous electrolyte secondary battery according to the embodiment has the negative electrode. Here, the nonaqueous electrolyte secondary battery is a secondary battery in which a nonaqueous electrolyte such as an organic solvent and an ionic liquid is used as the electrolyte and is a lithium-ion secondary battery or is a sodium-ion secondary battery, a potassium-ion secondary battery, a calcium-ion secondary battery, a magnesium-ion secondary battery or the like. Of these, a lithium-ion secondary battery is preferable.

The nonaqueous electrolyte secondary battery has a negative electrode, a positive electrode and an electrolyte and may have a separator placed between the positive electrode and the negative electrode. In the nonaqueous electrolyte secondary battery according to the embodiment, an electrode which is obtained by forming the CNT layer containing the polyurethane resin and the single-walled carbon nanotubes on the current collector and which does not contain the negative electrode active material is used as the negative electrode, and the structure of a known nonaqueous electrolyte secondary battery can be employed except for the structure of the negative electrode.

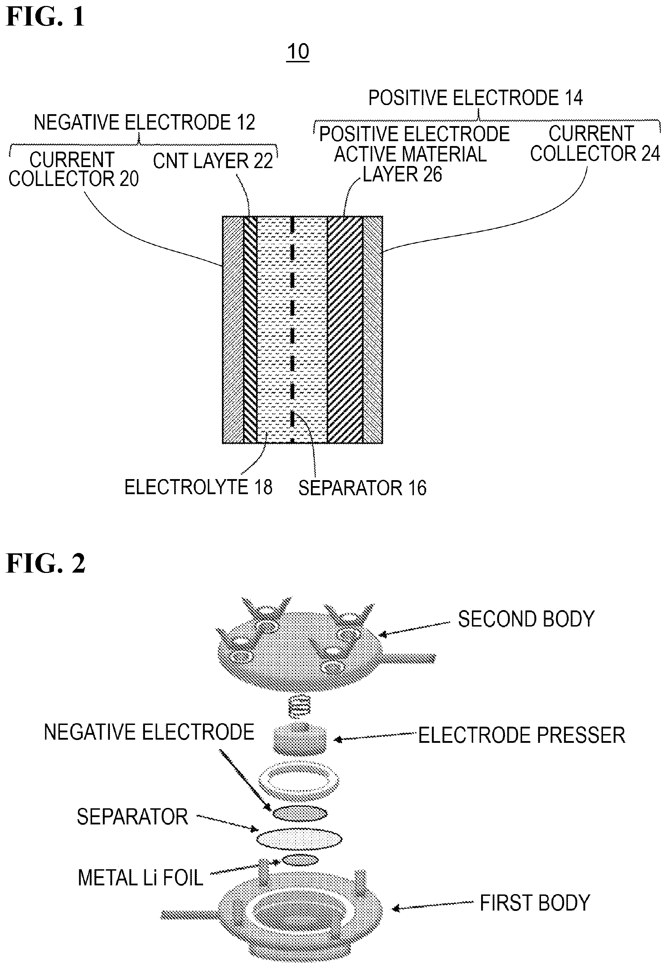

FIG. 1 is a schematic figure illustrating the structure of a nonaqueous electrolyte secondary battery 10 according to an embodiment. The nonaqueous electrolyte secondary battery 10 has a negative electrode 12, a positive electrode 14, a separator 16 placed between the negative electrode 12 and the positive electrode 14 and an electrolyte 18. The negative electrode 12 has a current collector 20 for a negative electrode and a CNT layer 22 provided on the current collector 20, and the negative electrode of the embodiment above can be used. The positive electrode 14 has a current collector 24 for a positive electrode and a positive electrode active material layer 26 containing a positive electrode active material provided on the current collector 24.

As the current collector used for the positive electrode, one which is generally used for a lithium-ion secondary battery can be used, and examples thereof include a foil composed of a metal material of aluminum, titanium, stainless steel and nickel and the like. Moreover, one obtained by treating the surface of such a metal with carbon, nickel, titanium, silver or the like may also be used.

The positive electrode active material layer is a layer containing a positive electrode active material and may contain a conductive additive and a binder together with the positive electrode active material. As the positive electrode active material, the conductive additive and the binder, those which are generally used for a lithium-ion secondary battery can be used, and examples of the positive electrode active material include a composite oxide of lithium and a transition metal such as lithium cobalt oxide, lithium manganate, lithium iron phosphate and lithium nickelate and the like.

As the separator, one which is generally used for a lithium-ion secondary battery can be used, and examples thereof include a porous resin composed of polyethylene, polypropylene, polyolefin, polytetrafluoroethylene or the like, ceramic, nonwoven cloth and the like.

As the electrolyte, one which is generally used for a lithium-ion secondary battery can be used. Here, the electrolyte is a substance containing an ion serving as a charge carrier such as lithium ion, and an electrolyte including a medium (a solvent or the like) for dissolving or dispersing an ionic crystal is referred to as the electrolyte. Examples of the electrolyte include a nonaqueous electrolytic solution obtained by dissolving an ionic crystal such as a lithium salt in an organic solvent, a nonaqueous electrolytic solution obtained by dissolving an ionic crystal such as a lithium salt in an ionic liquid, a solid electrolyte and a gel electrolyte. Of these, because higher coulombic efficiency is obtained, an ionic liquid is preferably used for the electrolyte, and for example, an electrolytic solution obtained by dissolving a lithium salt in an ionic liquid is preferably used as the electrolyte.

Examples of the lithium salt include LiPF₆, LiBF₄, LiClO₄, LiAsF₆, LiCF₃SO₃, LiC(CF₃SO₂)₃, LiN(CF₃SO₂)₂ (namely LiTFSI), LiN(FSO₂)₂ (namely LiFSI), LiBC₄O₃ and the like. Any one kind of the lithium salts may be used, or two or more kinds thereof may be used in combination. The lithium salt is preferably LiFSI or LiTFSI.

Examples of the organic solvent for dissolving the lithium salt include carbonates such as dimethyl carbonate, methyl ethyl carbonate, diethyl carbonate, ethylene carbonate, propylene carbonate, ethylene glycol dimethyl carbonate, propylene glycol dimethyl carbonate, ethylene glycol diethyl carbonate and vinylene carbonate, lactones such as γ-butyrolactone, ethers such as dimethoxyethane, tetrahydrofuran, 2-methyltetrahydrofuran, tetrahydropyran and 1,4-dioxane, sulfolanes such as sulfolane and 3-methylsulfolane, dioxolanes such as 1,3-dioxolane, ketones such as 4-methyl-2-pentanone, nitriles such as acetonitrile, pyropionitrile, valeronitrile and benzonitrile, halogenated hydrocarbons such as 1,2-dichloroethane and the like. Any one kind thereof may be used, or two or more kinds thereof may be used in combination.

The ionic liquid for dissolving the lithium salt is composed of a cationic component and an anionic component, is liquid at normal temperature (25°C), is not volatile and has relatively high decomposition temperature. Examples of the anionic component contained in the ionic liquid include BF₄⁻, PF₆⁻, SbF₆⁻, NO₃⁻, CF₃SO₃⁻, (FSO₂)₂N⁻ (namely FSI anion), (CF₃SO₂)₂N⁻ (namely TFSI anion), (C₂F₅SO₂)₂N⁻, (CF₃SO₂)₃C⁻, CF₃CO₂⁻, C₃F₇CO₂⁻, CH₃CO₂⁻, (CN)₂N⁻ and the like. Any one kind thereof may be used, or two or more kinds thereof may be used in combination.

Examples of the cationic component composing the ionic liquid include cations which are compounds containing an element such as N, P, S, O, C and Si and which have a linear structure or a cyclic structure such as a five-membered ring and a six-membered ring as the skeleton. Examples of the cyclic structure such as a five-membered ring and a six-membered ring include heterocyclic structures such as a furan ring, a thiophene ring, a pyrrole ring, a pyridine ring, an oxazole ring, an isoxazole ring, a thiazole ring, an isothiazole ring, a furazan ring, an imidazole ring, a pyrazole ring, a pyrazine ring, a pyrimidine ring, a pyridazine ring, a pyrrolidine ring, a piperidine ring, a benzofuran ring, an isobenzofuran ring, an indole ring, an isoindole ring, an indolizine ring and a carbazole ring. Of the cationic components, a linear or cyclic compound containing nitrogen element is chemically and electrochemically stable and is thus particularly preferable. Examples of the cation containing nitrogen element include alkylammoniums such as triethylammonium, 1-ethyl-3-methylimidazolium, 1-butyl-3-methylimidazolium, 1-methyl-1-propylpyrrolidinium, methylpropylpiperidinium and the like. Any one kind of the cations may be used, or two or more kinds thereof may be used in combination.

The concentration of the salt such as the lithium salt in the electrolytic solution is not particularly limited but is preferably 0.1 to 3.0 mol/L, more preferably 0.5 to 2.0 mol/L.

The nonaqueous electrolyte secondary battery according to the embodiment can be formed into a cylinder, a coin, a prismatic shape or any other shape. The basic structure of the battery is the same irrespective of the shape and can be obtained with modification in the design depending on the purpose. For example, a cylindrical battery is obtained by winding a negative electrode and a positive electrode through a separator, housing the wound material in a battery can, performing filling with a nonaqueous electrolytic solution and sealing with insulating plates placed on top and bottom. Moreover, in application to a coin-type battery, a disc negative electrode, a separator, a disc positive electrode and a stainless plate which are stuck on each other are housed in a coin-type battery can, and the can is sealed after filling with a nonaqueous electrolytic solution.

### Examples

Although the invention is explained in more detail below based on Examples and Comparative Examples, the invention is not limited thereto.

The details of the current collectors, the conductive materials, the binders and the electrolytic solutions used in the Examples are as follows.

### [Current Collectors]

· Cu foil: a copper foil having a thickness of 15 µm ("NC-WS" manufactured by Furukawa-Electric Co., Ltd.)
· Cu-Sn foil: a foil obtained by forming a film of tin having a thickness of 0.5 µm on the surface of a copper foil having a thickness of 15 µm by the film formation method below

### (Film Formation Method of Tin Plating)

A Cu foil was immersed in an aqueous 0.1 M hydrochloric acid solution for a second, and after removing the oxide on the Cu foil surface, the Cu foil was washed with pure water and dried. Then, the Cu foil was immersed in an Sn plating liquid ("580M-Z series" manufactured by ISHIHARA CHEMICAL Co., Ltd.) at 60°C for five minutes. Then, the Sn-plated copper foil was washed with pure water and cut, and thus a Cu-Sn foil was produced.

### [Conductive Materials]

· SWCNT: a water dispersion having a single-walled carbon nanotube concentration of 0.99 mass% prepared using single-walled carbon nanotubes ("TUBALL BATT" manufactured by OCSiAl, carbon purity>99%, average diameter=1.6 nm, average fiber length=5 µm) as a conductive material by the water dispersion preparation method below
· MWCNT: a water dispersion having a multi-walled carbon nanotube concentration of 0.99 mass% prepared using multi-walled carbon nanotubes ("Flotube9110" manufactured by CNano, carbon purity>99%, average diameter=12 nm, average fiber length=10 µm) as a conductive material by the water dispersion preparation method below
· AB: a water dispersion having an acetylene black concentration of 0.99 mass% prepared using acetylene black ("Li-400" manufactured by Denka Company Limited) as a conductive material by the water dispersion preparation method below

### (Water Dispersion Preparation Method)

In a beaker, 1.0 g of the conductive material was mixed in 100 g of an aqueous 1 mass% solution of carboxymethyl cellulose salt ("Cellogen 7A" manufactured by DKS Co. Ltd.), stirred and then dispersed for 90 minutes using the beaker, an ultrasonic homogenizer ("US-600T" manufactured by NIHONSEIKI KAISHA LTD.), a circulation unit and a tube pump at an output of 100 µA while the slurry was circulated. Thus, a water dispersion of the conductive material was obtained.

### [Binders]

· WPU1: the water dispersion of a lithium salt of an anionic polyurethane resin obtained by Synthetic Example 1 below

### (Synthetic Example 1)

To a four-neck flask having a stirrer, a reflux condenser, a thermometer and a nitrogen blowing tube, 51.3 parts by mass of polycarbonate polyol ("ETERNACOLL UH-100" manufactured by UBE, an average hydroxyl value of 110.0 mg KOH/g, an active hydrogen group number of 2.0), 5.1 parts by mass of dimethylolpropionic acid (an active hydrogen group number of 2), 2.6 parts by mass of trimethylolpropane (an active hydrogen group number of 2), 41.0 parts by mass of dicyclohexylmethane 4,4'-diisocyanate and 150 parts by mass of methyl ethyl ketone were added and reacted at 75°C for four hours, and thus a methyl ethyl ketone solution of a urethane prepolymer having a free isocyanate group content of 3.0 mass% based on the nonvolatile content was obtained. The solution was cooled to 45°C and emulsified and dispersed using a homogenizer after an aqueous lithium hydroxide solution (1.59 parts by mass of lithium hydroxide monohydrate and 300 parts by mass of water) was gradually added. Subsequently, an aqueous solution obtained by diluting 2.08 parts by mass of ethylene diamine (an active hydrogen group number of 2) with 100 parts by mass of water was added, and chain extension reaction was conducted for an hour. The solvent was removed therefrom under reduced pressure under heating at 50°C, and thus a polyurethane resin water dispersion having a nonvolatile content of about 32 mass% was obtained.

· WPU2: the water dispersion of a sodium salt of an anionic polyurethane resin obtained by Synthetic Example 2 below

### (Synthetic Example 2)

A polyurethane resin water dispersion having a nonvolatile content of about 32 mass% was obtained in the same manner as in Synthetic Example 1 except that an aqueous sodium hydroxide solution (1.51 parts by mass of sodium hydroxide and 300 parts by mass of water) was used instead of the aqueous lithium hydroxide solution.

· WPU3: the water dispersion of a lithium salt of an anionic polyurethane resin obtained by Synthetic Example 3 below

### (Synthetic Example 3)

To a four-neck flask having a stirrer, a reflux condenser, a thermometer and a nitrogen blowing tube, 74.1 parts by mass of polybutadiene polyol ("PolyVestHT" manufactured by Evonik, an average hydroxyl value of 46.5 mg KOH/g, an active hydrogen group number of 2.32), 4.2 parts by mass of dimethylolpropionic acid (an active hydrogen group number of 2), 21.7 parts by mass of dicyclohexylmethane 4,4'-diisocyanate and 150 parts by mass of methyl ethyl ketone were added and reacted at 75°C for four hours, and thus a methyl ethyl ketone solution of a urethane prepolymer having a free isocyanate group content of 2.15 mass% based on the nonvolatile content was obtained. The solution was cooled to 45°C and emulsified and dispersed using a homogenizer after an aqueous lithium hydroxide solution (1.31 parts by mass of lithium hydroxide monohydrate and 300 parts by mass of water) was gradually added. Subsequently, an aqueous solution obtained by diluting 1.05 parts by mass of diethylenetriamine (an active hydrogen group number of 3) with 100 parts by mass of water was added, and chain extension reaction was conducted for an hour. The solvent was removed therefrom under reduced pressure under heating at 50°C, and thus a polyurethane water dispersion having a nonvolatile content of about 32 mass% was obtained.

· WPU4: the water dispersion of a triethylamine salt of an anionic polyurethane resin obtained by Synthetic Example 4 below

### (Synthetic Example 4)

To a four-neck flask having a stirrer, a reflux condenser, a thermometer and a nitrogen blowing tube, 51.3 parts by mass of polycarbonate polyol ("ETERNACOLL UH-100" manufactured by UBE, an average hydroxyl value of 110.0 mg KOH/g, an active hydrogen group number of 2.0), 5.1 parts by mass of dimethylolpropionic acid (an active hydrogen group number of 2), 2.6 parts by mass of trimethylolpropane (an active hydrogen group number of 2), 41.0 parts by mass of dicyclohexylmethane 4,4'-diisocyanate and 100 parts by mass of methyl ethyl ketone were added. Then, by reacting at 75°C for four hours, a methyl ethyl ketone solution of a polyurethane prepolymer was obtained. The free isocyanate group content of the solution was 3.0 mass% based on the nonvolatile content. The solution was cooled to 45°C, neutralized by adding 2.9 parts by mass of triethylamine and then emulsified and dispersed using a homogenizer after gradually adding 300 parts by mass of water. Subsequently, an aqueous solution obtained by diluting 2.08 parts by mass of ethylene diamine (an active hydrogen group number of 2) with 100 parts by mass of water was added, and chain extension reaction was conducted for an hour. The solvent was removed therefrom under reduced pressure under heating at 50°C, and thus a polyurethane water dispersion having a nonvolatile content of about 32 mass% was obtained.

· SBR: the styrene-butadiene rubber (SBR) emulsion obtained by Synthetic Example 5 below

### (Synthetic Example 5)

To a flask having a stirrer, a reflux condenser and a thermometer, 51 parts by mass of preparation water and 0.2 parts by mass of dodecylbenzene sulfonic acid salt were fed, and the temperature was raised to 40°C. Moreover, a pre-emulsified solution was prepared separately with a pre-emulsified solution composition of five parts by mass of acrylonitrile, eight parts by mass of methyl methacrylate, 55 parts by mass of styrene, 32 parts by mass of 1,3-butadiene and 0.95 parts by mass of alkylbenzene sulfonic acid salt by emulsifying and dispersing these in 40 parts by mass of preparation water. The pre-emulsified solution was added dropwise to the flask over four hours with a dropping funnel, and 0.4 parts by mass of an aqueous 10 mass% solution of a sodium persulfate initiator were added as a polymerization initiator to initiate polymerization. After maintaining the reaction temperature at 65°C for four hours, the temperature was raised to 80°C, and the reaction was continued further for two hours. Thus, an SBR emulsion was obtained. Dilution water was added thereto, and thus an SBR emulsion having a nonvolatile content of about 40 mass% was obtained.

### [Electrolytic Solutions]

Electrolytic solution 1: LiFSI/MPPy-FSI (lithium salt: lithium bis(fluorosulfonyl)imide, ionic liquid: 1-methyl-1-propylpyrrolidinium bis(fluorosulfonyl)imide), a lithium salt concentration of 1 mol/kg
Electrolytic solution 2: LiFSI/EC:DMC=1:1 (lithium salt: lithium bis(fluorosulfonyl)imide, organic solvent: ethylene carbonate/dimethyl carbonate=1/1 (volume ratio)), a lithium salt concentration of 1 mol/L

### (Examples 1 to 4 and Comparative Examples 1 to 4)

The conductive materials and the binders shown in Table 1 below were used and mixed at the blending ratios shown in Table 1, and after the solid component concentrations were adjusted to 12 mass% with water, stirring treatment for 10 minutes was conducted with a mixer. The blending ratios of binder/conductive material in the table are the mass ratios of the resin solid component amount as the binder and the conductive material (the amount of the single-walled carbon nanotubes, the multi-walled carbon nanotubes or acetylene black as the conductive component). As the mixer, a vortex mixer (Scientific Industries, Inc, "VORTEX-GENIE 2Mixer") was used here, but the the stirring device does not basically make any difference. Adequate amounts of the obtained mixture solutions were dropped on current collectors pasted on glass base plates and coated using a spin coater ("MIKASA SPINNER" manufactured by MIKASA CO., LTD.) under the conditions of a rotation speed of 2000 rpm and a rotation time for 20 seconds. Cu foils were used as the current collectors. The current collectors after coating were placed in an air dryer, and negative electrodes were produced by drying treatment at 100°C × 30 minutes.

The thicknesses of the coating films after drying (the layers containing the binder and the conductive material (the CNT layers in the Examples)) were measured using a micrometer ("MDE-25PJ" manufactured by Mitutoyo Corporation).

The coulombic efficiencies of the obtained negative electrodes of Examples 1 to 4 and Comparative Examples 1 to 4 were measured. In Comparative Example 1, as a blank, the coulombic efficiency (charge/discharge efficiency) was measured using the current collector as it was as the negative electrode without forming the coating film. The measurement method is as follows.

### (Production of Cell for Evaluation)

The construction of a cell for evaluation was conducted in a glove box with a dew point of -70°C or lower in argon atmosphere. As illustrated in FIG. 2, a metal Li foil having a diameter of 13 mm was pasted to the bottom of a first body of a two-electrode cell for electrochemical measurement. A polyimide separator having a diameter of 20 mm which was impregnated with the electrolytic solution 1 for 30 minutes under reduced pressure was placed thereon. The negative electrode having a diameter of 14 mm was placed thereon, and the cell was sealed with a second body through an electrode presser and a spring. Thus, a cell for evaluation was produced.

### (Measurement Conditions of Coulombic Efficiency)

The cell for evaluation was charged and discharged in a thermostatic chamber at 25°C using a constant-current charge/discharge apparatus ("BTS2004W" manufactured by Nagano Corporation) as a measurement apparatus. The current density was 1.00 mA/cm², and Li of 1 mAh at a constant current was deposited on the current collector of the negative electrode. Then, constant-current discharging was conducted up to cut-off voltage 1.0 V vs. Li/Li⁺. This was repeated 50 times, and the average coulombic efficiency in Li dissolution/deposition reaction was calculated. The average coulombic efficiency was the average value of 100 × discharge capacity/charge capacity (%) of the cycles. In this regard, the cells for evaluation which could not be charged/discharged and thus did not operate as a battery were indicated as "failure" for the coulombic efficiencies.

**[Table 1]**

| | Comp. Ex. 1 | Ex. 1 | Ex. 2 | Comp. Ex. 2 | Ex. 3 | Ex. 4 | Comp. Ex. 3 | Comp. Ex. 4 |
|---|---|---|---|---|---|---|---|---|
| Current Collector | Cu foil | Cu foil | Cu foil | Cu foil | Cu foil | Cu foil | Cu foil | Cu foil |
| Blending Ratio (Binder/ Conductive Material) | - | 98.8/1.2 | 98.8/1.2 | 98.8/1.2 | 98.8/1.2 | 98.8/1.2 | 98.8/1.2 | 98.8/1.2 |
| Conductive Material Kind | - | SWCNT | SWCNT | SWCNT | SWCNT | SWCNT | AB | MWCNT |
| Binder Kind | - | WPU1 | WPU2 | SBR | WPU3 | WPU4 | WPU1 | WPU1 |
| Salt Type of Binder | - | Li | Na | - | Li | NEt₃ | Li | Li |
| Electrolytic Solution Kind | Electrolytic Solution 1 | Electrolytic Solution 1 | Electrolytic Solution 1 | Electrolytic Solution 1 | Electrolytic Solution 1 | Electrolytic Solution 1 | Electrolytic Solution 1 | Electrolytic Solution 1 |
| Thickness of Coating Film | - | 1 µm | 1 µm | 1 µm | 1 µm | 1 µm | 1 µm | 1 µm |
| Coulombic Efficiency (%) | 97.2 | 97.9 | 97.7 | 97.2 | 98.1 | 97.7 | Failure | Failure |

The results are as shown in Table 1. Compared to Comparative Example 1, which is a blank using the copper foil as it was as the current collector, the coulombic efficiencies of Examples 1 to 4, in which a layer containing the polyurethane resin and the single-walled carbon nanotubes was formed on the copper foil, improved even though no negative electrode active material was contained. On the other hand, improvement in the coulombic efficiency compared to that of Comparative Example 1 as a blank was not observed in Comparative Example 2, which used the styrene-butadiene rubber as the binder instead of the polyurethane resin. Moreover, the cells could not be charged and discharged and did not operate in Comparative Examples 3 and 4, in which acetylene black or the multi-walled carbon nanotubes were used as the conductive material instead of the single-walled carbon nanotubes.

Regarding the salt type of the polyurethane resin as the binder, the effect of improving the coulombic efficiency of Example 1 using the lithium salt was superior to those of Example 2 using the sodium salt and Example 4 using the triethylamine salt (NEt₃).

### (Measurement of Nucleation Overvoltage)

The nucleation overvoltages of the negative electrodes of Examples 1, 2 and 4 were measured and evaluated as indicators of resistance. In the measurement of the coulombic efficiencies using the cells for evaluation above using the negative electrodes of Examples 1, 2 and 4, the difference between the minimum voltage value during the first charging and the voltage at the time of completion of the first charging was defined as the nucleation overvoltage. The results are shown in Table 2 below.

**[Table 2]**

| | Ex. 1 | Ex. 2 | Ex. 4 |
|---|---|---|---|
| Conductive Material Kind | SWCNT | SWCNT | SWCNT |
| Binder Kind | WPU1 | WPU2 | WPU4 |
| Salt Type of Binder | Li | Na | NEt₃ |
| Coulombic Efficiency (%) | 97.9 | 97.7 | 97.7 |
| Nucleation Overvoltage (mV) | 41 | 56 | 104 |

As shown in Table 2, regarding the salt type of the polyurethane resin, the nucleation overvoltages of the lithium salt and the sodium salt were smaller and better than that of the amine salt. Moreover, it is seen that, to improve the coulombic efficiency while reducing the nucleation overvoltage, the lithium salt is more effective than the sodium salt.

### (Examples 5 to 9 and Comparative Examples 5 and 6)

Negative electrodes were produced, and the coulombic efficiencies were measured, in the same manner as in Examples 1 to 4 and Comparative Examples 1 to 4 above, except for using a Cu-Sn foil as the current collector instead of the Cu foil and changing the kinds of the binder and the conductive material and the blending ratio as shown in Table 3 below. The negative electrodes having coating films having different thicknesses of Examples 6 and 7 were produced by changing the solid component concentration of the mixture solution. In Comparative Example 5, as a blank, the coulombic efficiency was measured using the Cu-Sn foil as the current collector as it was as the negative electrode without forming the coating film.

**[Table 3]**

| | Comp. Ex. 5 | Ex. 5 | Comp. Ex. 6 | Ex. 6 | Ex. 7 | Ex. 8 | Ex. 9 |
|---|---|---|---|---|---|---|---|
| Current Collector | Cu-Sn foil | Cu-Sn foil | Cu-Sn foil | Cu-Sn foil | Cu-Sn foil | Cu-Sn foil | Cu-Sn foil |
| Blending Ratio (Binder/ Conductive Material) | - | 98.8/1.2 | 98.8/1.2 | 98.8/1.2 | 98.8/1.2 | 99.4/0.6 | 98.2/1.8 |
| Conductive Material Kind | - | SWCNT | SWCNT | SWCNT | SWCNT | SWCNT | SWCNT |
| Binder Kind | - | WPU1 | SBR | WPU1 | WPU1 | WPU1 | WPU1 |
| Salt Type of Binder | - | Li | - | Li | Li | Li | Li |
| Electrolytic Solution Kind | Electrolytic Solution 1 | Electrolytic Solution 1 | Electrolytic Solution 1 | Electrolytic Solution 1 | Electrolytic Solution 1 | Electrolytic Solution 1 | Electrolytic Solution 1 |
| Thickness of Coating Film | - | 1 µm | 1 µm | 0.5 µm | 2 µm | 1 µm | 1 µm |
| Coulombic Efficiency (%) | 97.4 | 97.7 | 97.1 | 97.9 | 97.5 | 97.6 | 97.7 |

The results are as shown in Table 3. Compared to Comparative Example 5, which is a blank using the Cu-Sn foil as it was as the current collector, the coulombic efficiencies of Examples 5 to 9, in which a layer containing the polyurethane resin and the single-walled carbon nanotubes was formed on the Cu-Sn foil, improved even though no negative electrode active material was contained. The effect of improving the coulombic efficiency was observed even when the thickness of the coating film was changed and when the blending ratio of binder/conductive material was changed. On the other hand, in Comparative Example 6, which used the styrene-butadiene rubber as the binder instead of the polyurethane resin, the coulombic efficiency decreased compared to that of Comparative Example 5 as a blank.

### (Example 10 and Comparative Example 7)

In Example 10, the coulombic efficiency was measured in the same manner as in Example 1 except for using the electrolytic solution 2 using an organic solvent as the electrolytic solution instead of the electrolytic solution 1 using the ionic liquid. In Comparative Example 7, as a blank, the coulombic efficiency was measured using the Cu foil as the current collector as it was as the negative electrode without forming the coating film and using the electrolytic solution 2 as the electrolytic solution as in Example 10.

**[Table 4]**

| | Comp. Ex. 7 | Ex. 10 |
|---|---|---|
| Current Collector | Cu foil | Cu foil |
| Blending Ratio (Binder/Conductive Material) | - | 98.8/1.2 |
| Conductive Material Kind | - | SWCNT |
| Binder Kind | - | WPU1 |
| Salt Type of Binder | - | Li |
| Electrolytic Solution Kind | Electrolytic Solution 2 | Electrolytic Solution 2 |
| Thickness of Coating Film | - | 1 µm |
| Coulombic Efficiency (%) | 93.8 | 94.7 |

The results are as shown in Table 4. Even when the organic-based electrolytic solution 2 was used as the electrolytic solution, the coulombic efficiency improved in Example 10, in which a layer containing the polyurethane resin and the single-walled carbon nanotubes was formed on the Cu foil, compared to that of Comparative Example 7 as a blank, although no negative electrode active material was contained.

In this regard, the upper limits and the lower limits of the various numerical ranges described in the specification can be combined freely, and all the combinations should be regarded as being described as preferable numerical ranges in the present specification. Moreover, a numerical range "X to Y" means X or more and Y or less.

Some embodiments of the invention are explained above, but the embodiments are provided as examples and are not intended to limit the scope of the invention. The embodiments can be carried out in various other forms, and various types of omission, substitution and change can be made within the scope which does not depart from the gist of the invention. The embodiments, omission, substitution and change thereof and the like are included in the scope and the gist of the invention as well as in the invention described in the scope of the claims and equivalents thereof.

### Reference Signs List

10···nonaqueous electrolyte secondary battery, 12···negative electrode, 14···positive electrode, 16···separator, 18···electrolyte, 20···current collector, 22···CNT layer, 24···current collector, 26···positive electrode active material layer

## Claims

1. A negative electrode for a nonaqueous electrolyte secondary battery which comprises a current collector and a layer containing a polyurethane resin and a single-walled carbon nanotube placed on the current collector and which does not contain a negative electrode active material.

2. The negative electrode for a nonaqueous electrolyte secondary battery according to claim 1, wherein the polyurethane resin contains a lithium salt and/or a sodium salt of an anionic polyurethane resin.

3. The negative electrode for a nonaqueous electrolyte secondary battery according to claim 1, wherein the polyurethane resin contains an alicyclic polyisocyanate as a raw material.

4. The negative electrode for a nonaqueous electrolyte secondary battery according to claim 1, wherein a mass ratio (A)/(B) of the polyurethane resin (A) and the single-walled carbon nanotube (B) is 99.9/0.1 to 97.0/3.0.

5. The negative electrode for a nonaqueous electrolyte secondary battery according to claim 1, wherein a thickness of the layer containing the polyurethane resin and the single-walled carbon nanotube is 0.5 to 2 µm.

6. A nonaqueous electrolyte secondary battery comprising the negative electrode for a nonaqueous electrolyte secondary battery according to any one of claims 1 to 5.

7. The nonaqueous electrolyte secondary battery according to claim 6, wherein an ionic liquid is used for an electrolyte.
